# EUROPEAN PATENT APPLICATION

(11) **EP 4 195 316 A1**
(43) Date of publication of application: **14.06.2023**
(21) Application number: 22211546.1
(22) Date of filing: 06.12.2022
(51) Int. Cl.: H01M 4/133, H01M 4/1393, H01M 4/62, H01M 10/0525

(54) **BINDER FOR NEGATIVE ELECTRODE OF RECHARGEABLE LITHIUM BATTERY AND RECHARGEABLE LITHIUM BATTERY INCLUDING SAME**

(30) Priority: 07.12.2021 KR 20210173966
(71) Applicant: Samsung SDI Co., Ltd., Yongin-si, Gyeonggi-do 17084 (KR)
(72) Inventor: CHO, Yunshik, 17084 Yongin-si, Gyeonggi-do (KR); OH, Seunghyun, 17084 Yongin-si, Gyeonggi-do (KR); CHO, Minho, 17084 Yongin-si, Gyeonggi-do (KR); LEE, Kukjoo, 17084 Yongin-si, Gyeonggi-do (KR); JUNG, Kyunghwa, 17084 Yongin-si, Gyeonggi-do (KR); LEE, Jungmin, 17084 Yongin-si, Gyeonggi-do (KR)
(74) Representative: Gulde & Partner

(57) **Abstract**

Disclosed is that a binder for a negative electrode of a rechargeable lithium battery, a negative electrode for a rechargeable lithium battery, and a rechargeable lithium battery including the same, and the binder including a copolymer of a styrene-based monomer and an acrylate-based monomer, wherein a mole ratio of the styrene-based monomer and the acrylate-based monomer is about 1:1 to about 1:3.

## Description

### BACKGROUND OF THE INVENTION

### (a) Field of the Invention

It relates to a binder for a negative electrode of a rechargeable lithium battery and a rechargeable lithium battery including the same.

### (b) Description of the Related Art

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density.

A rechargeable lithium battery includes a positive electrode and a negative electrode which may include an active material being capable of intercalating and deintercalating lithium ions, and an electrolyte, and generate electrical energy due to an oxidation and reduction reaction when lithium ions are intercalated and deintercalated into the positive electrode and the negative electrode.

As for a positive active material of a rechargeable lithium battery, transition metal compounds such as lithium cobalt oxides, lithium nickel oxides, and lithium manganese oxide are mainly used. As the negative active material, a crystalline carbonaceous material such as natural graphite or artificial graphite, or an amorphous carbonaceous material is used.

The important study for improving performances of such rechargeable lithium battery is to actively conduct to develop the battery capable of rapid charging. The rapid charging generally causes to decrease the cycle-life, thereby causing capacity fading. Such problems require materials and battery design capable of reducing internal resistance of the battery, and particularly, development of a low-resistance binder for an electrode.

The above information disclosed in this Background section is only for enhancement of understanding of the background of the invention, and therefore it may contain information that does not form the prior art that is already known in this country to a person of ordinary skill in the art.

### SUMMARY OF THE INVENTION

One embodiment provides a binder for a negative electrode of a rechargeable lithium battery capable of improving impregnation of an electrolyte and minimizing resistance of a battery.

Another embodiment provides a negative electrode for a rechargeable lithium battery including the binder.

Still another embodiment provides a rechargeable lithium battery including the negative electrode.

According to one aspect of the present invention, there is provided a binder for a negative electrode of a rechargeable lithium battery as defined in claim 1. The binder includes a copolymer of a styrene-based monomer and an acrylate-based monomer, wherein a mole ratio of the styrene-based monomer and the acrylate-based monomer is 1:1 to 1:3. The binder may have a swelling degree to an electrolyte of 50 wt% or more and 70 wt% or less.

Another aspect of the invention provides a negative electrode including the binder and a negative active material.

Still another aspect of the invention provides a rechargeable lithium battery including the negative electrode, a positive electrode, and an electrolyte.

The binder for a negative electrode of a rechargeable lithium battery may exhibit high energy density and excellent cycle-life characteristics.

### BRIEF DESCRIPTION OF THE DRAWINGS

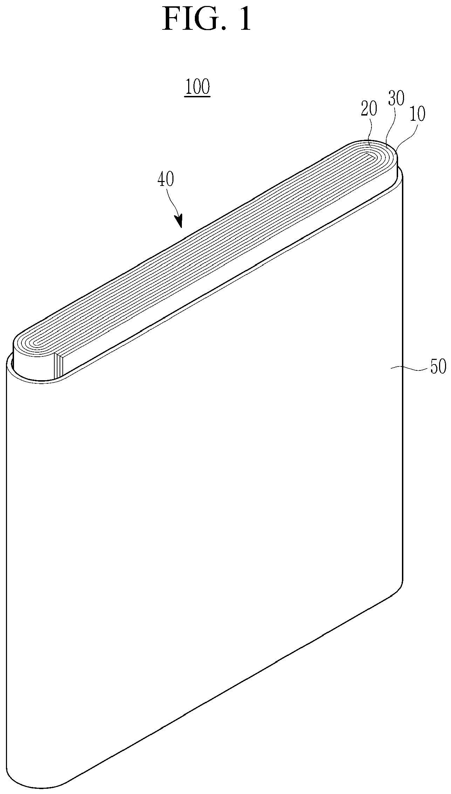

FIG. 1 is a schematic view of a rechargeable lithium battery according to an embodiment.

### DETAILED DESCRIPTION OF THE INVENTION

Hereinafter, embodiments of the present invention are described in detail. However, these embodiments are merely examples, the present invention is not limited thereto, and the present invention is defined by the scope of claims.

A binder for a negative electrode of a rechargeable lithium battery may include a copolymer of a styrene-based monomer and an acrylate-based monomer. Herein, in the copolymer, a mixing ratio of the styrene-based monomer and the acrylate-based monomer may be about 1:1 to about 1:3 by mole ratio. As such, the binder according to one embodiment may include the acrylate-based monomer at the same amount or larger amount to the styrene-based monomer. When the mixing ratio of the styrene-based monomer and the acrylate-based monomer falls into the range, the excellent impregnation to the electrolyte, low resistance, and excellent room temperature and low temperature cycle-life characteristics may be exhibited.

The inclusion of larger of the styrene-based monomer rather than the acrylate-based monomer in the binder may cause an increase of the electrode resistance and deterioration of low temperature capacity retention. Alternatively, the mixing ratio of the acrylate-based monomer to the styrene-based monomer is more than about 3, that is, more than about 3/1, the impregnation to the electrolyte may be increased, but the low temperature capacity retention may be deteriorated.

Furthermore, the binder may have a swelling degree to an electrolyte of about 50 wt% or more and about 70 wt% or less. When the binder has the swelling degree to the electrolyte within the range, the excellent impregnation to the electrolyte, low resistance, and excellent room temperature and low temperature cycle-life characteristics may be exhibited.

In particular, the mixing ratio of the styrene-based monomer and the acrylate-based monomer and the swelling degree to the electrolyte within both ranges in the copolymer may allow to effectively maintain the adhesion to a current collector, and to exhibit decreased resistance, particularly decreased resistance at low temperatures, and excellent room temperature and low temperature cycle-life characteristics. If any one of the mixing ratio of the styrene-based monomer and the acrylate-based monomer and the swelling degree to the electrolyte are not satisfied the above, the impregnation of the electrolyte and the adhesion to the current collector are insufficient, thereby increasing resistance, and particularly deteriorating low temperature cycle-life characteristics.

In one embodiment, the styrene-based monomer may be styrene, α-methylstyrene, β-methylstyrene, p-t-butyl styrene, chlorostyrene, or a combination thereof. The styrene-based monomer according to one embodiment may include no butadiene, thereby improving high temperature stability of the negative electrode.

The acrylate-based monomer may be 2-ethylhexylacrylate, methyl(meth)acrylate, ethyl(meth)acrylate, propyl(meth)acrylate, isopropyl(meth)acrylate, n-butyl(meth)acrylate, isobutyl(meth)acrylate, n-amyl(meth)acrylate, isoamyl(meth)acrylate, n-hexyl(meth)acrylate, hydroxyethyl(meth)acrylate, hydroxypropyl(meth)acrylate, isobornyl acrylate, isovinyl acrylate, isovinyl methacrylate, or a combination thereof. In one embodiment, (meth)acrylate refers to methacrylate or acrylate. For example, methyl(meth)acrylate indicates methylmethacrylate or methylacrylate.

Such an acrylate-based monomer may reduce resistance. The increases in the swelling degree due to the use of the acrylate-based monomer may be suppressed by using the styrene-based monomer.

The binder according to one embodiment is a copolymer of the styrene-based monomer and the acrylate-based monomer. The copolymer may be synthesized by polymerizing the styrene-based monomer and the acrylate-based monomer, and may be a cross-linked copolymer in which the styrene-based monomer and the acrylate-based monomer are emulsion-polymerized in the polymerization process.

The binder according to one embodiment is the cross-linked copolymer, so that the swelling degree may be reduced. In one embodiment, the swelling degree to the electrolyte refers to a ratio of mass, i.e., a ratio of weight, after allowing to stand to the initial weight and the weight after allowing to stand is obtained by immersing a binder film into an electrolyte, heating, and allowing to stand for a predetermined time.

The heating may be performed at about 50 °C to about 100 °C.

The binder film may be prepared by drying a binder solution obtained during the binder preparation.

The electrolyte may be an electrolyte which is generally used in the rechargeable lithium battery. The predetermined time may be about 24 hours to about 120 hours.

The binder according to one embodiment may have a surface contact angle to the electrolyte of about 20° to about 60°. The surface contact angle may be measured by dropping an electrolyte to a binder film prepared by using the binder, as same with the measurement of the swelling degree. The electrolyte may be a generally used electrolyte in the rechargeable lithium battery.

The binder solution may be an aqueous solution. Thus, the binder solution may be suitably applicable to the negative electrode. As the positive active material is a weak material in the aqueous system, it is not appropriate to employ the binder according to one embodiment to the positive electrode.

The binder according to one embodiment may be prepared by polymerizing the styrene-based monomer, the acrylate-based monomer and a cross-linking agent in water. Herein, an emulsifier and an initiator may be further used.

The binder may be formed by polymerization of a binder solution comprising:
0.01 parts by weight to 3 parts by weight of a cross-linking agent;
0.1 parts by weight to 3 parts by weight of an emulsifier;
0.1 parts by weight to about 3 parts by weight of an initiator; and
100 parts by weight of a mixture of the styrene-based monomer and the acrylate-based monomer in a mixing ratio of 1:1 to 1:3 in mole ratio.

The cross-linking agent may be a crosslinkable multi-functional monomer with two or more unsaturated groups such as divinylbenzene, ethylene glycol di(metha)acrylate, trimethylol propane tri(metha)acrylate, triallyl cyanurate, and the like, or silane coupling agents with at least one ethylenic unsaturated bond, such as vinyl trimethoxy silane, vinyl triethoxy silane, γ-methacryloxy propyl trimethoxy silane, γ-methacryloxy propyl triethoxy silane, and the like. In one embodiment, the cross-linking agent may be divinylbenzene, trimethylolpropane tri(metha)acrylate, γ-methacryloxy propyltrimethoxysilane, or a combination thereof.

The emulsifier may be a higher fatty acid alkali salt, N-acrylamino acid salt, alkylether carboxylate, acylated peptide, alkyl sulfonate, alkylbenzene sulfonate, alkylamino acid salt, alkyl naphthalene sulfonate, sulfosuccinic acid salt, sulfonated oil, alkyl sulfate, alkyl ether sulfate, alkyl aryl ether sulfate, alkyl amide sulfate, alkyl phosphate, alkyl phosphate and alkyl aryl ether phosphate, or a combination thereof.

Examples of the emulsifier may be sodium dodecylbenzene sulfonate.

The alkyl group may be a C1 to C20 alkyl.

The initiator may be ammonium persulfate, potassium persulfate, hydrogen peroxide, t-butyl hydroperoxide, or a combination thereof.

An amount of the cross-linking agent may be about 0.01 parts by weight to about 3 parts by weight, or about 0.01 parts by weight to about 2 parts by weight based on the total amount, 100 parts by weight of the styrene-based monomer and the acrylate-based monomer. When the amount of the cross-linking agent is out of the range, the swelling degree may be too excessively increased or too excessively reduced.

An amount of the emulsifier may be about 0.1 parts by weight to 3 parts by weight, or, 0.1 parts by weight to 2 parts by weight based on the total weight based on the total weight, 100 wt% of the styrene-based monomer and the acrylate-based monomer. When the amount of the emulsifier is within the range, the adhesion may be further improved and a binder having a sufficient size that is effectively distributed may be prepared.

An amount of the initiator may be about 0.1 parts by weight to about 3 parts by weight, or about 0.1 parts by weight to about 2 parts by weight based on the total weight, or 100 parts by weight of the styrene-based monomer and the acrylate-based monomer.

A negative electrode includes the binder and a negative active material. Particularly, the negative electrode according to one embodiment includes a negative active material layer including the binder and the negative active material and a current collector supported on the negative active material layer. The negative active material layer may be positioned on one or both sides of the current collector.

The negative active material includes a material that reversibly intercalates/deintercalates lithium ions, a lithium metal, a lithium metal alloy, a material capable of doping/dedoping lithium or a transition metal oxide.

The material that reversibly intercalates/deintercalates lithium ions may be a carbon material that may be any generally-used carbon-based negative active material in a rechargeable lithium ion battery, and examples thereof may be crystalline carbon, amorphous carbon, or a combination thereof. The exemplary of the carbon material may be crystalline carbon, amorphous carbon, or a mixture thereof. The crystalline carbon may be graphite such as unspecified shape, sheet shape, flake shape), or spherical or fiber shaped natural graphite or artificial graphite, and the amorphous carbon may be soft carbon, hard carbon, mesophase pitch carbide, sintered cokes, and the like.

The soft carbon may be obtained from coal pitch, petroleum pitch, polyvinylchloride, mesophase pitch, tar, low molecular weight heavy oil, or a combination thereof.

The hard carbon may be obtained from a polyvinyl alcohol resin, a furfuryl alcohol resin, triton, citric acid, stearic acid), sucrose, polyvinylidene fluoride, carboxymethyl cellulose, hydroxypropyl cellulose, regenerated cellulose, polyvinyl pyrrolidone, polyethylene, polypropylene, ethylene-propylene-diene monomer (EPDM), polyacrylic acid, sodium polyacrylate, polyacrylonitrile, glucose, gelatin, saccharide, a phenol resin, a naphthalene resin, a polyamide resin, a furan resin, a polyimide resin, a cellulose resin, a styrene resin, an epoxy resin, a chloride vinyl resin, or a combination thereof.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition elements oxide may be vanadium oxide, lithium vanadium oxide, lithium titanium oxide, and the like.

According to one embodiment, the negative active material may be a Si-carbon composite and the Si-carbon composite may include silicon particles and crystalline carbon. The silicon particle may have an average particle diameter D50 of about 10 nm to about 200 nm. The Si-C composite may further include an amorphous carbon layer formed on at least portion. In the specification, when a definition is not otherwise provided, such a particle diameter (D50) indicates a diameter of particle where a cumulative volume is about 50 volume% in a particle distribution.

According to another embodiment, the negative active material may be at least two negative active materials, and for example, may include the Si-carbon composite as a first negative active material and crystalline carbon as a second negative active material. When the negative active material includes at least two negative active materials, the mixing ratio thereof may be suitably controlled, but it may be desired to control until an amount of Si is about 3 wt% to about 50 wt% based on the total weight of the negative active material.

The Si-carbon composite may include silicon and crystalline carbon. Herein, the silicon particle may have an average particle diameter D50 of about 10 nm to about 200 nm. The Si-carbon composite may further include an amorphous carbon layer formed on at least portion. In the specification, when a definition is not otherwise provided, such a particle diameter (D50) indicates a diameter of particles where a cumulative volume is about 50 volume% in a particle distribution. In the Si-carbon composite, an amount of silicon may be about 1 wt% to about 60 wt%.

The average particle diameter (D50) of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

The negative active material may include the silicon-based negative active material as a first negative active material, and a carbon-based negative active material as a second negative active material. Herein, the mixing ratio of the first negative active material and the second negative active material may be about a 1:99 to about a 50:50 weight ratio. More specifically, the negative active material may include the first negative active material and the second negative active material at a weight ratio of about 5:95 to about 20:80.

The carbon-based negative active material may be crystalline carbon, and the crystalline carbon may be artificial graphite, natural graphite, or a combination thereof.

An amount of the negative active material may be about 95 wt% to about 99 wt% or about 92 wt% to about 97 wt% based on the negative active material layer.

An amount of the binder may be about 1 wt% to about 5 wt% based on the total, 100 wt% of the negative active material layer.

The negative active material layer may further include a conductive material. When the negative active material layer further includes a conductive material, the negative active material layer includes about 90 wt% to about 98 wt% of the negative active material, about 1 wt% to about 5 wt% of the binder, and about 1 wt% to about 5 wt% of the conductive material.

The conductive material is included to provide electrode conductivity. Any electrically conductive material may be used as a conductive material unless it causes a chemical change. The conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

Another embodiment provides a rechargeable lithium battery including the negative electrode, a positive electrode, and an electrolyte.

The positive electrode may include a current collector and a positive active material layer formed on the current collector.

The positive active material may include lithiated intercalation compounds that reversibly intercalate and deintercalate lithium ions. Specifically, one or more composite oxides of a metal selected from cobalt, manganese, nickel, and a combination thereof, and lithium, may be used. More specifically, the compounds represented by one of the following chemical formulae may be used. LiₐA_{1-b}X_{b}D₂ (0.90≤a≤1.8, 0≤b≤0.5); LiₐA_{1-b}X_{b}O_{2-c}D_{c} (0.90≤ a≤1.8, 0≤b≤0.5, 0≤c≤0.05); LiₐE_{1-b}X_{b}O_{2-c}D_{c} (0.90≤a≤1.8, 0≤b≤0.5, 0≤c≤0.05); LiₐE_{2-b}X_{b}O_{4-c}D_{c} (0.90≤a≤1.8, 0≤b≤0.5, 0 ≤ c ≤ 0.05); LiₐNi_{1-b-c}Co_{b}X_{c}D_{α} (0.90≤a≤1.8, 0≤ b ≤ 0.5, 0 ≤ c ≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0 ≤c≤0.5, 0<α<2); LiₐNi_{1-b-c}Mn_{b}X_{c}D_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.05, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GₑO₂ (0.90≤a≤1.8, 0≤b≤0.9, 0≤c≤0.5, 0≤d≤0.5, 0≤e≤0.1); LiₐNi_{b}Co_{c}Al_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS2; LiQS2; V₂O₅; LiV₂O₅; LiZO₂; LiNiVO₄; Li_{(3-f)}J₂(PO₄)₃ (0≤f≤2); Li_{(3-f)}Fe₂(PO₄)₃(0≤f≤2); LiₐFePO₄(0.90≤a≤1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof..

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like, but are not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may use Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone, and the like. The alcohol-based solvent includes ethyl alcohol, isopropyl alcohol, and the like, and examples of the aprotic solvent include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance.

The carbonate-based solvent may include a mixture with a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

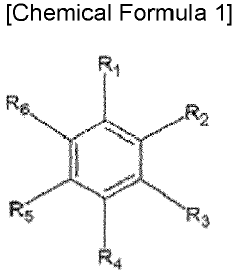

In Chemical Formula 1, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinyl ethyl carbonate, vinylene carbonate, or an ethylene carbonate-based compound represented by Chemical Formula 2, as an additive for improving cycle life.

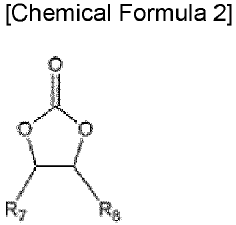

In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), where x and y are natural numbers, for example, an integer of about 1 to about 20), lithium difluoro(bisoxolato) phosphate), LiCI, Lil, LiB(C₂O₄)₂ (lithium bis(oxalato) borate: LiBOB), and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride, or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment of the present invention. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

### (Example 1)

Styrene was mixed with 2-ethylhexylacrylate at a 1:1 mole ratio, and the resulting mixture, a sodium dodecylbenzene sulfonate emulsifier, divinylbenzene cross-linking agent, a potassium persulfate initiator and water were mixed therewith. Herein, based on 100 parts by of the resulting mixture, the emulsifier was used at 0.3 parts by weight, the cross-linking agent was used at 0.1 parts by weight, and the initiator was used at 0.5 parts by weight.

Thereafter, the obtained mixture was emulsion polymerized to prepare a binder solution including a cross-linked copolymer of styrene and 2-ethylhexylacrylate.

The binder solution, a carboxymethyl cellulose thickener, and an artificial graphite negative active material were mixed with water as solvent to prepare a negative active material slurry. Herein, the binder solution was used in order to have an amount of the binder of 3 wt% in the slurry. That is, the mixing process was perform to reach an amount of the binder to be 3 wt%, that of the thickener to be 1 wt% and that of the negative active material to be 94 wt% and the residue of the slurry being water.

The negative active material slurry was coated on a copper foil current collector and dried followed by pressing to prepare a negative electrode.

Using the negative electrode, a lithium metal counter electrode and a half-cell was fabricated by the general procedure. As the electrolyte, a 1.5 M LiPF₆ dissolved ethylene carbonate and ethyl methyl carbonate and dimethyl carbonate (30:50:20 volume ratio) was used.

### (Example 2)

A binder solution was prepared by the same procedure as in Example 1, except that a mole ratio of styrene and 2-ethylhexylacrylate was changed into 1:2.

A negative electrode and a half-cell were fabricated by the same procedure as in Example 1, except for using the binder a solution.

### (Example 3)

A binder solution was prepared by the same procedure as in Example 1, except that a mole ratio of styrene and 2-ethylhexylacrylate was changed into 1:3.

A negative electrode and a half-cell were fabricated by the same procedure as in Example 1, except for using the binder a solution.

### (Comparative Example 1)

A binder solution was prepared by the same procedure as in Example 1, except that a mole ratio of styrene and 2-ethylhexylacrylate was changed into 2:1.

A negative electrode and a half-cell were fabricated by the same procedure as in Example 1, except for using the binder a solution.

### (Comparative Example 2)

A binder solution was prepared by the same procedure as in Example 1, except that a mole ratio of styrene and 2-ethylhexylacrylate was changed into 3:1.

A negative electrode and a half-cell were fabricated by the same procedure as in Example 1, except for using the binder a solution.

### (Comparative Example 3)

A binder solution was prepared by the same procedure as in Example 1, except that a mole ratio of styrene and 2-ethylhexylacrylate was changed into 1:4.

A negative electrode and a half-cell were fabricated by the same procedure as in Example 1, except for using the binder solution.

### (Comparative Example 4)

Styrene was mixed with 2-ethylhexylacrylate at a 1:2 mole ratio, and the resulting mixture, a sodium dodecylbenzene sulfonate emulsifier, a potassium persulfate initiator and water were mixed. Herein, based on 100 parts by of the resulting mixture, the emulsifier was used at 0.3 parts by weight and the initiator was used at 0.5 parts by weight.

Using the mixture, a binder solution was prepared by the same procedure as in Example 1, and a negative electrode and a half-cell were fabricated.

### (Comparative Example 5)

A negative electrode and a half-cell were fabricated by the same procedure as in Example 2, except that the cross-linking agent was used at an amount of 5 parts by weight based on 100 parts by weight of the mixture.

### (Comparative Example 6)

3 wt% of styrene-butadiene rubber, 1 wt% of a carboxymethyl cellulose thickener, and 94 wt% of an artificial graphite negative active material were mixed in a water solvent to prepare a negative active material slurry.

A negative electrode and a half-cell were fabricated by the same procedure as in Example 1, except for using the negative active material slurry.

### Experimental Example 1) Measurement of swelling degree of electrolyte

The binder solutions prepared by Examples 1 to 3 and the Comparative Examples 1 to 5 were dried to prepare binder films.

The binder film was impregnated into an electrolyte in which 1.5M LiPF₆ is dissolved in a mixed solvent of ethylene carbonate, ethyl methyl carbonate and dimethyl carbonate (30:50:20 volume ratio) and allowed to stand at 70 °C for 3 days.

A weight ratio of the weight of the obtained binder film after allowing to the weight of the binder film before after allowing to stand was calculated. The results are shown in Table 1 as the swelling degree (%) of electrolyte.

### Experimental Example 2) Measurement of contact angle

10 *µ*ℓ of an electrolyte was dropped into the binder film prepared by Experimental Example 1, and an angle between the droplets on the film and the binder film were measured. The results are shown in Table 1 as a contact angle.

As the electrolyte, 1.5M LiPF₆ dissolved in a mixed solvent of ethylene carbonate, ethyl methyl carbonate and dimethyl carbonate (30:50:20 volume ratio) was used.

**Table 1**

| | Mole ratio of styrene/2-ethylhexylacrylate | Swelling degree of electrolyte (%) | Contact angle (°) |
|---|---|---|---|
| Example 1 | 1/1 | 52 | 39 |
| Example 2 | 1/2 | 61 | 37 |
| Example 3 | 1/3 | 67 | 36 |
| Comparative Example 1 | 2/1 | 41 | 43 |
| Comparative Example 2 | 3/1 | 38 | 46 |
| Comparative Example 3 | 1/4 | 73 | 35 |
| Comparative Example 4 | 1/2 | 192 | 35 |
| Comparative Example 5 | 1/2 | 4 | 34 |

As shown in Table 1, Examples 1 to 3 in which the mole ratio of styrene and 2-ethylhexylacrylate was within the range of 1:1 to 1:3 had the swelling degree to electrolyte satisfying the range of 50 % to 70 % and the contact angle (°) within the range of 36° to 39°.

Whereas, Comparative Examples 1 to 3 in which the mole ratios of styrene and 2-ethylhexylacrylate were 2/1, 3/1, and 1/4, respectively, and Comparative Example 4 in which the cross-linking agent was not used, although the mole ratio of styrene and 2-ethylhexylacrylate was 1/2, exhibited the swelling degree to the electrolyte out of the range of 50 % to 70 %. Comparative Example 5 in which 5 parts by weight, a large amount of the cross-linking agent, was used, although the mole ratio of styrene and 2-ethylhexylacrylate which was 1/2 exhibited an extremely low swelling degree to the electrolyte of 4 %.

### Experimental Example 3) Measurement of adherence

The adhesion strength of the negative active material layer to the current collector in the negative electrodes according to Examples 1 to 3 and Comparative Examples 1 to 6 was measured using a 180° UTM tensile strength tester by adhering the double-side tape adhered to a slide glass, to the positive electrode, to prepare a sample and measuring the sample with the tester. The results are shown in Table 2.

### Experimental Example 4) Measurement of DC internal resistance (DC-IR: Direct current internal resistance)

The half-cells according to Examples 1 to 3 and Comparative Examples 1 to 6 were charged and discharged once under a condition of which constant current/constant voltage charging under a condition of 0.2 C, 4.25 V, and a 0.05 C cut-off at -10 °C, pausing for 10 minutes, and constant discharging under a condition of 0.33 C, and a 2.80 V cut-off, and pausing for 10 minutes. DC internal resistance (DC-IR) was evaluated by measuring a voltage drop (V) while a current flowed at 1 C for 1 second under a SOC50 (50 % charge capacity based on 100 % of entire battery charge capacity, which is 50 % discharged in a discharge state). The results are shown in Table 2.

### Experimental Example 5) Measurement of room temperature 25 °C and low temperature 10 °C cycle-life characteristics

The half-cells according to Examples 1 to 3 and Comparative Examples 1 to 6 were charged and discharged at 1 C under a room temperature of 25 °C for 500 cycles. The ratio of discharge capacity at 500th to discharge capacity at 1^{st} were obtained. The results are shown in Table 2 as room temperature capacity retention.

The half-cells according to Examples 1 to 3 and Comparative Examples 1 to 6 were charged and discharged at 1 C under a low temperature of 10 °C for 500 cycles. The ratio of discharge capacity at 500th to discharge capacity at 1^{st} were obtained. The results are shown in Table 2 as low temperature capacity retentions.

**Table 2**

| | Adherence (gf/mm) | DC-IR (mΩ, -10 °C) | Room temperature of 25 °C capacity retention (%) | Low temperature of 10 °C capacity retention (%) |
|---|---|---|---|---|
| Example 1 | 1.03 | 208 | 93 | 89 |
| Example 2 | 1.01 | 203 | 93 | 91 |
| Example 3 | 0.95 | 199 | 92 | 88 |
| Comparative Example 1 | 1.01 | 218 | 92 | 81 |
| Comparative Example 2 | 1.02 | 224 | 91 | 79 |
| Comparative Example 3 | 0.88 | 197 | 90 | 83 |
| Comparative Example 4 | 1.03 | 193 | 88 | 76 |
| Comparative Example 5 | 0.75 | 235 | 71 | 58 |
| Comparative Example 6 | 1.05 | 227 | 92 | 77 |

As shown in Table 1, the half-cells of Examples 1 to 3 exhibited maintained adherence, low resistance, and excellent room temperature and low temperature capacity retentions.

Whereas, Comparative Examples 1 to 3 using larger amount of styrene than 2-ethylhexylacrylate, exhibited increased resistance, or deteriorated room temperature capacity retention and low temperature capacity retention. Comparative Example 36 using extremely large amount of 2-ethylhexylacrylate exhibited too high resistance and significantly low temperature capacity retention.

Comparative Example 4 without the cross-linking agent, even if styrene and 2-ethylhexylacrylate were used at a suitable ratio, exhibited very high swelling degree to the electrolyte and deteriorated room temperature capacity retention and low temperature capacity retention. Comparative Example 5 using too large an amount of the cross-linking agent, even though styrene and 2-ethylhexylacrylate were used at a suitable ratio, exhibited extremely low swelling degree to the electrolyte, severely increased resistance, and surprisingly deteriorated room temperature and low temperature capacity retentions.

While this disclosure has been described in connection with what is presently considered to be practical example embodiments, it is to be understood that the invention is not limited to the disclosed embodiments, but, on the contrary, is intended to cover various modifications and equivalent arrangements included within scope of the appended claims.

## Claims

1. A binder for a negative electrode (20) of a rechargeable lithium battery (100), comprising:
a copolymer of a styrene-based monomer and an acrylate-based monomer,
wherein a mixing ratio of the styrene-based monomer and the acrylate-based monomer is 1:1 to 1:3 mole ratio.

2. The binder for a negative electrode of a rechargeable lithium battery of claim 1, wherein the styrene-based monomer is styrene, α-methylstyrene, β-methylstyrene, p-t-butyl styrene, chlorostyrene, or a combination thereof.

3. The binder for a negative electrode of a rechargeable lithium battery of claim 1 or 2, wherein the acrylate-based monomer is 2-ethylhexylacrylate, methyl(meth)acrylate, ethyl(meth)acrylate, propyl(meth)acrylate, isopropyl(meth)acrylate, n-butyl(meth)acrylate, isobutyl(meth)acrylate, n-amyl(meth)acrylate, isoamyl(meth)acrylate, n-hexyl(meth)acrylate, hydroxyethyl(meth)acrylate, hydroxypropyl(meth)acrylate, isobornyl acrylate, isovinylacrylate, isovinyl methacrylate, or a combination thereof.

4. The binder for a negative electrode of a rechargeable lithium battery of claim 3, wherein the styrene-based monomer is styrene and the acrylate-based monomer is 2-ethylhexylacrylate.

5. The binder for a negative electrode of a rechargeable lithium battery of any one of the preceding claims, wherein the copolymer is a cross-linked copolymer.

6. The binder for a negative electrode of a rechargeable lithium battery of claim 5, wherein the binder is formed by polymerization of a binder solution comprising:
0.01 parts by weight to 3 parts by weight of a cross-linking agent;
0.1 parts by weight to 3 parts by weight of an emulsifier;
0.1 parts by weight to about 3 parts by weight of an initiator; and
100 parts by weight of a mixture of the styrene-based monomer and the acrylate-based monomer in a mixing ratio of 1:1 to 1:3 in mole ratio.

7. The binder for a negative electrode of a rechargeable lithium battery of claim 6, wherein the binder solution is an aqueous solution.

8. The binder for a negative electrode of a rechargeable lithium battery of any one of the preceding claims, wherein the binder has a swelling degree to an electrolyte of 50 wt% or more and 70 wt% or less.

9. A negative electrode (20), comprising:
the binder of any one of the preceding claims; and
a negative active material.

10. A rechargeable lithium battery (100), comprising:
the negative electrode (20) of claim 9;
a positive electrode (10); and
an electrolyte.
